# EUROPÄISCHE PATENTSCHRIFT

(11) **EP 2 736 193 B1**
(45) Veröffentlichungstag und Bekanntmachung des Hinweises auf die Patenterteilung: **21.01.2015**
(21) Anmeldenummer: 13181962.5
(22) Anmeldetag: 28.08.2013
(51) Int. Cl.: H04L 12/24, H04L 12/12, H04L 12/40, G06F 1/32

(54) **Elektrisches/elektronisches Installationsgerät**
Electric/electronic installation device
Appareil d'installation électrique/électronique

(30) Priorität: 23.11.2012 DE 102012111333
(43) Veröffentlichungstag der Anmeldung: 28.05.2014
(73) Patentinhaber: Insta Elektro GmbH, 58509 Lüdenscheid (DE)
(72) Erfinder: Schlicht, Thomas, 58093 Hagen (DE)

(56) Entgegenhaltungen:
- EP-A1- 1 545 051
- EP-A2- 0 434 231

## Beschreibung

Die vorliegende Erfindung geht von einem gemäß Oberbegriff des Hauptanspruches konzipierten elektrischen/elektronischen Installationsgerät der Gebäudesystemtechnik aus.

Derartige elektrische/elektronische Installationsgeräte sind in der Regel dafür vorgesehen, auf besonders komfortable Art und Weise eine Vielzahl von in Gebäuden installierte Aktoren und Sensoren (Jalousieantriebe, Beleuchtungseinrichtungen, Fühler, Wächter usw.) bedarfsgerecht zu beeinflussen. Zu diesem Zweck sind die unterschiedlichsten Installationsgeräte, wie Schalter, Taster, Dimmer usw. bekannt geworden. Oftmals sind solche elektrischen/elektronischen Installationsgeräte vor Ort bedienbar und zum Anschluss an ein Bussystem vorgesehen.

Um der heutigen Notwendigkeit Energie zu sparen gerecht zu werden, bieten einige neue Generationen von Busteilnehmern (elektrische/elektronische Installationsgeräte) der Gebäudesystemtechnik die Möglichkeit, in einen energiesparenden Betriebszustand zu wechseln. In diesen Zustand gelangen die Teilnehmer (Busteilnehmer) nach einer gewissen Zeit der Untätigkeit, aber auch zum Beispiel über eine Aufforderung in Form einer Gruppenkommunikation. Es gibt die Möglichkeit, einen sich im Energiesparmodus befindlichen Teilnehmer unter bestimmten Konditionen wieder aus diesem Energiesparmodus heraus zu holen. Dies geschieht auf Grund von Punkt-Zu-Punkt-Telegrammen (Informationen), mittels allgemeinen Broadcast-Telegrammen oder mittels einer gezielten Gruppenkommunikation mit den sich im Energiesparmodus befindlichen Teilnehmern. Ein sich im Energiesparmodus befindlicher Teilnehmer eines solchen Bussystems der Gebäudesystemtechnik ist in der Regel soweit im Energiebedarf reduziert, dass er auf Gruppenkommunikation nicht mehr reagiert. Das heißt, die auf dem Bussystem ausgetauschten Informationen finden bei dem sich im Energiesparmodus befindlichen Teilnehmer keine Berücksichtigung. Ein im Energiesparmodus befindlicher Teilnehmer reagiert auf die Gruppenkommunikation, an der er ansonsten teilnehmen würde, also nicht mit einer Statusänderung. Die Ausnahme bildet nur die gezielte Gruppeninformation (separate Aufweckinformation), die als Kondition zum Beenden des Energiesparmodus definiert wurde. Mit der letzteren Bedingung zum Beenden des Energiesparmodus, nämlich der separaten Aufweckinformation, gelingt es, ganze Gruppen von Teilnehmern aus dem Energiesparmodus zu holen und somit einen Informationsaustausch zwischen den Teilnehmern des Bussystems (wieder) zu ermöglichen und zwar solange, bis (wieder) eine Bedingung erfüllt ist, damit die Teilnehmer wieder in den Energiesparmodus wechseln. Mit dem Absenden einer solchen separaten Aufweckinformation ist ein sogenanntes Zentralgerät (Zentralteilnehmer) betraut.

Durch die EP 1 545 051 A1 und die US 2007/0124608 A1 sind jeweils, dem Oberbegriff des Hauptanspruches entsprechende elektrische/elektronische Installationsgeräte (Busteilnehmer) bekannt geworden. Diese elektrischen/elektronischen Installationsgeräte sind jeweils zum Informationsaustausch mit anderen Teilnehmern für den Anschluss an ein Bussystem der Gebäudesystemtechnik vorgesehen. Sie weisen jeweils ein mit einem Mikrocontroller versehenes Anwendungsmodul und ein mit einer Logikeinheit versehenes Busmodul auf. Das Anwendungsmodul kann jeweils in einen energiesparenden Betriebszustand versetzt und durch den Zugang bestimmter Informationen wieder aus dem energiesparenden Betriebszustand in den normalen Betriebszustand zurückgeführt werden, wobei das Anwendungsmodul zumindest eine Vorrangstufe aufweist, die das Aussenden einer durch eine Anforderung hervorgerufene Wirkinformation so lange zurückstellt, bis durch eine, der Vorrangstufe zugehörige Aufweckstufe jeweils eine Aufweckinformation für zumindest einen weiteren Teilnehmer in das zugehörige Bussystem abgegeben wurde.

Zudem ist durch die DE 10 2009 010 964 B3 ein elektrisches/elektronisches Installationsgerät (Busteilnehmer) bekannt geworden. Dieses elektrische/elektronische Installationsgerät ist für den Anschluss an ein Bussystem der Gebäudesystemtechnik vorgesehen und kann auf einfache Art und Weise vor Ort bedient werden. Zum Beispiel ist eine Vorortbedienung über einen Touchscreen, Tastschalter usw. möglich. Um den Stromverbrauch so gering wie möglich zu halten, kann ein solches elektrisches/elektronisches Installationsgerät in einen sogenannten Sleep-Modus bzw. energiesparenden Betriebszustand (Ruhebetrieb) geschaltet werden. Durch eine Kommunikation bzw. zugeleitete Information wird das elektrische/elektronische Installationsgerät mittels einer Weckfunktion aus dem Sleep-Modus bzw. energiesparenden Betriebszustand wieder in ihren normalen Betriebszustand bzw. Betriebsmodus geschaltet. Schwierigkeiten können entstehen, wenn sich mehrere Teilnehmer des Bussystems im Sleep-Modus bzw. energiesparenden Betriebszustand (Ruhebetrieb) befinden und eine Wirkinformation zum Beispiel durch eine Vorortbedienung, Automatikfunktion usw. ausgeführt werden soll. Um Wirkinformationen austauschen zu können, muss bei derart ausgebildeten elektrischen/elektronischen Installationsgeräten aufwendig mittels eines Zentralgerätes eine separate Aufweckinformation (Wecktelegramm) an die Teilnehmer des Bussystems abgegeben werden, damit ein Wirkinformationsaustausch stattfinden und die zugehörige Funktion ausgelöst werden kann.

Ausgehend von derart ausgebildeten elektrischen/elektronischen Installationsgeräten liegt der vorliegenden Erfindung die Aufgabe zugrunde, ein elektrisches/elektronisches Installationsgerät zu schaffen, welches selbst, nämlich ohne die Hilfe eines Zentralgerätes, in zeitlich engem Zusammenhang eine Aufweckinformation und eine Wirkinformation in das Bussystem abgibt. Vorteilhafterweise wird ein Aufwecksignal lediglich dann erzeugt, wenn sich das, die Wirkinformation sendende elektrische/elektronische Installationsgerät vorher im energiesparenden Betriebszustand bzw. Sleep-Modus befand.

Erfindungsgemäß wird diese Aufgabe durch die im Hauptanspruch angegebenen Merkmale gelöst.

Bei einer solchen Ausbildung ist besonders vorteilhaft, dass durch entsprechende Gestaltung der Aufweckinformation (Wecktelegramm) nur der/die Teilnehmer des Bussystems aus dem energiesparenden Betriebszustand herausgeholt wird/werden, für den/die die Wirkinformation des aussendenden elektrischen/elektronischen Installationsgerätes bestimmt ist bzw. sind. Somit ist eine erhöhte Einsparung von Energie auf einfache Art und Weise möglich.

Weitere vorteilhafte Ausgestaltungen des erfindungsgemäßen Gegenstandes sind in den Unteransprüchen angegeben. Anhand von zwei Ausführungsbeispielen sei die Erfindung im Prinzip näher erläutert, dabei zeigt:
- Fig. 1:: Prinziphaft ein solches elektrisches/elektronisches Installationsgerät als Blockschaltbild, gemäß erstem Ausführungsbeispiel;
- Fig. 2:: Prinziphaft ein solches elektrisches/elektronisches Installationsgerät als Blockschaltbild, gemäß zweitem Ausführungsbeispiel.

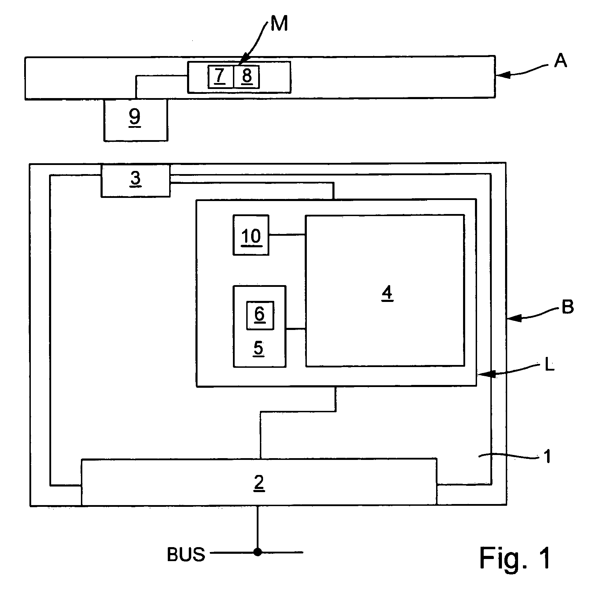

Üblicherweise bestehen solche elektrischen/elektronischen Installationsgeräte im Wesentlichen aus einem, aus Kunststoff bestehenden, zur Aufnahme der Funktionselemente vorgesehenen Gehäuse, wobei mehrere Funktionselemente zumindest auf einer im Gehäuse festgelegten Leiterplatte 1 angeordnet sind. Wie insbesondere aus Figur 1 hervorgeht, besteht ein solches elektrisches/elektronisches Installationsgerät gemäß erstem Ausführungsbeispiel aus einem separaten Busmodul B und einem ankoppelbaren bzw. demontierbaren separaten Anwendungsmodul A. Das Busmodul B ist mit einer Leiterplatte 1 ausgerüstet, welche eine erste Schnittstelle 2 für die Ankopplung an ein Bussystem BUS des Gebäudes und eine zweite Schnittstelle 3 für die Verbindung bzw. Kopplung mit dem Anwendungsmodul A aufweist. Außerdem ist auf der Leiterplatte 1 ein mit einer Empfangsstufe, einer Sendestufe und einer Energieversorgungseinheit versehener, zu einer Logikeinheit L gehöriger, Transceiver 4 angeordnet. Dem Transceiver 4 bzw. der Logikeinheit L ist eine Aufweckerkennungseinrichtung 5 für vom Bussystem BUS kommende Informationen (Telegramm) zugeordnet. Die Aufweckerkennungseinrichtung 5 steht über die Logikeinheit L mit der für das Anwendungsmodul A vorgesehenen zweiten Schnittstelle 3 datentechnisch in Verbindung. Um ein applikationsspezifisches Aufwecktelegramm erkennen zu können, verfügt die Aufweckerkennungseinrichtung 5 über einen Referenztelegrammspeicher 6, in welchem zumindest ein komplettes Telegramm als Referenztelegramm abgespeichert werden kann. Der Transceiver 4 ist, wie bereits erwähnt, Bestandteil der auf der Leiterplatte 1 angeordneten Logikeinheit L des Busmoduls B. Das Anwendungsmodul A ist mit einem Mikrocontroller M ausgerüstet und weist eine Vorrangstufe 7 auf, die das Aussenden einer durch eine Anforderung hervorgerufene Wirkinformation so lange zurückstellt, bis durch eine, der Vorrangstufe 7 zugehörige Aufweckstufe 8 eine Aufweckinformation für zumindest einen weiteren Teilnehmer in das Bussystem BUS abgegeben wurde. Als Anforderung soll zum Beispiel eine Vorortbedienung des elektrischen/elektronischen Installationsgerätes, ein Automatikbefehl, ein zeitabhängiger Befehl usw. verstanden werden.

Beim ersten Ausführungsbeispiel stellen das Anwendungsmodul A und das Busmodul B, wie bereits erwähnt, zwei separate Module dar. Damit das Anwendungsmodul A auf einfache Art und Weise mit dem Busmodul B verbunden werden kann, weist dieses einen Stecker 9 auf, der zum Zwecke der Kopplung mit der zweiten Schnittstelle 3 des Busmoduls B in Verbindung gebracht wird. Die Logikeinheit L des Busmoduls B ist mit einem Adressspeicher 10 ausgerüstet, welcher zur Speicherung der eigenen physikalischen Adresse dient, um vom Bussystem BUS abgehende Telegramme mit Punkt-zu-Punkt-Adressierung erkennen zu können. Beim vorliegenden ersten Ausführungsbeispiel weist das Anwendungsmodul A zur Vorortbedienung mehrere - der Einfachheit halber nicht dargestellte - Tastschalter auf. Befindet sich das elektrische/elektronische Installationsgerät in seinem energiesparenden Betriebszustand, bedeutet dies, dass die Logikeinheit L des Busmoduls B weiter mit der, für den Betrieb notwendigen, Energie versorgt wird; der Mikrocontroller M des Anwendungsmoduls A wurde jedoch durch einen entsprechenden Vorgang in den energiesparenden Zustand (Sleep-Modus) versetzt. Das Anwendungsmodul A befindet sich in einem sogenannten Sleep-Modus mit minimaler Energieaufnahme. Soll nun durch eine Vorortbedienung eine Wirkinformation in das Bussystem Bus abgegeben werden, ist davon auszugehen, dass sich auch die übrigen Teilnehmer des Bussystems BUS im energiesparenden Betriebszustand (Sleep-Modus) befinden. Betätigt der Benutzer nun einen Tastschalter des Anwendungsmoduls A, um eine bestimmte Funktion, z. B. das Einschalten einer Leuchte, vorzunehmen, wird die damit verbundene Wirkinformation durch die Vorrangstufe 7 des Mikrocontrollers M solange zurückgehalten, bis die zur Vorrangstufe 7 gehörige Aufweckstufe 8 eine Aufweckinformation für den entsprechenden Busteilnehmer (Leuchte) in das Bussystem BUS abgegeben hat. Auf einfache Art und Weise ist somit ein elektrisches/elektronisches Installationsgerät geschaffen, welches selbst, nämlich ohne die Hilfe eines Zentralgerätes, in zeitlich engem Zusammenhang eine Aufweckinformation und eine Wirkinformation in das Bussystem abgibt. Vorteilhafterweise wird ein Aufwecksignal - wie bereits beschrieben - lediglich dann erzeugt, wenn sich das, die Wirkinformation sendende elektrische/elektronische Installationsgerät vorher im energiesparenden Betriebszustand bzw. Sleep-Modus befand. Vorteilhafterweise können zum Beispiel durch entsprechende Gestaltung der Aufweckinformation (Wecktelegramm) nur die Teilnehmer des Bussystems BUS aus dem energiesparenden Betriebszustand herausgeholt werden, für die die Wirkinformation des aussendenden elektrischen/elektronischen Installationsgerätes tatsächlich bestimmt ist. Somit ist eine erhöhte Einsparung von Energie auf einfache Art und Weise möglich.

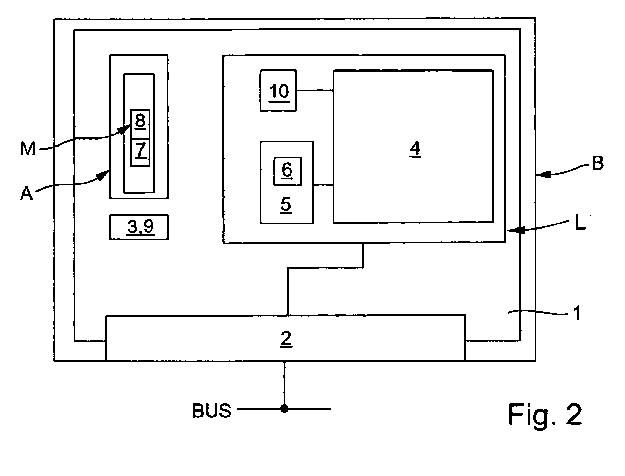

Wie insbesondere aus Figur 2 hervorgeht, kann ein solches elektrisches/elektronisches Installationsgerät gemäß zweitem Ausführungsbeispiel auch so ausgeführt sein, dass sowohl die Funktionselemente des Busmoduls B, als auch die Funktionselemente des Anwendungsmoduls A auf einer einzigen, vom Gehäuse aufgenommenen Leiterplatte 1 angeordnet sind. Es handelt sich dabei um so genannte Kompaktgeräte oder Reiheneinbaugeräte, welche nach der Fertigstellung vom Anwender nicht mehr in zwei separate Geräteeinheiten aufgeteilt werden können. Solche elektrischen/elektronischen Installationsgeräte können zur Unterbringung der notwendigen Funktionselemente gegebenenfalls auch mehr als nur eine einzige Leiterplatte aufweisen. Wie auch beim ersten Ausführungsbeispiel weist das Busmodul B gemäß zweitem Ausführungsbeispiel eine Leiterplatte 1 auf, welche mit einer ersten Schnittstelle 2 für die Ankopplung an ein Bussystem BUS des Gebäudes versehen ist. Außerdem ist auf der Leiterplatte 1 ein mit einer Empfangsstufe, einer Sendestufe und einer Energieversorgungseinheit versehener, zu einer Logikeinheit L gehöriger, Transceiver 4 angeordnet. Dem Transceiver 4 bzw. der Logikeinheit L ist eine Aufweckerkennungseinrichtung 5 für vom Bussystem BUS kommende Informationen (Telegramm) zugeordnet. Die Aufweckerkennungseinrichtung 5 steht über die Logikeinheit L mit der für das Anwendungsmodul A vorgesehenen zweiten Schnittstelle 3 datentechnisch in Verbindung. Auch die zweite Schnittstelle 3 befindet sich auf der Leiterplatte 1 und steht mit einem, zum Anwendungsmodul A gehörigen, Stecker 9 in Verbindung. Um ein applikationsspezifisches Aufwecktelegramm erkennen zu können, verfügt die Aufweckerkennungseinrichtung 5 über einen Referenztelegrammspeicher 6, in welchem zumindest ein komplettes Telegramm als Referenztelegramm abgespeichert werden kann. Der Transceiver 4 ist, wie bereits erwähnt, Bestandteil der auf der Leiterplatte 1 angeordneten Logikeinheit L des Busmoduls B. Das Anwendungsmodul A ist mit einem Mikrocontroller M ausgerüstet und weist eine Vorrangstufe 7 auf, die das Aussenden einer durch eine Anforderung hervorgerufene Wirkinformation so lange zurückstellt, bis durch eine, der Vorrangstufe 7 zugehörige Aufweckstufe 8 eine Aufweckinformation für zumindest einen weiteren Teilnehmer in das Bussystem BUS abgegeben wurde. Als Anforderung soll zum Beispiel eine Vorortbedienung des elektrischen/elektronischen Installationsgerätes, ein Automatikbefehl, ein zeitabhängiger Befehl usw. verstanden werden. Die Logikeinheit L des Busmoduls B ist meinem Adressspeicher 10 ausgerüstet, welcher zur Speicherung der eigenen physikalischen Adresse dient, um vom Bussystem BUS abgehende Telegramme mit Punkt-zu-Punkt Adressierung erkennen zu können.

Beim vorliegenden zweiten Ausführungsbeispiel weist das elektrische/elektronische Gerät einen - der Einfachheit halber nicht dargestellten - zur Vorortbedienung vorgesehenen Tastschalter auf. Zudem kann ein solches elektrisches/elektronisches Installationsgerät Automatikbefehle, zeitabhängige Befehl usw. ausführen. Befindet sich das elektrische/elektronische Installationsgerät in seinem energiesparenden Betriebszustand, bedeutet dies, dass die Logikeinheit L des Busmoduls B weiter mit der, für den Betrieb notwendigen, Energie versorgt wird; der Mikrocontroller M des Anwendungsmoduls A wurde jedoch durch einen entsprechenden Vorgang in den energiesparenden Zustand (Sleep-Modus) versetzt. Das Anwendungsmodul A befindet sich in einem sogenannten Sleep-Modus mit minimaler Energieaufnahme. Soll nun zum Beispiel durch einen Automatikbefehl eine Wirkinformation in das Bussystem Bus abgegeben werden, ist davon auszugehen, dass sich auch die übrigen Teilnehmer des Bussystems BUS im energiesparenden Betriebszustand (Sleep-Modus) befinden. Ist nun der Zeitpunkt zum Aussenden des Automatikbefehls gekommen, um eine bestimmte Funktion, z. B. das Einschalten einer Leuchte, vorzunehmen, wird die damit verbundene Wirkinformation durch die Vorrangstufe 7 des Mikrocontrollers M solange zurückgehalten, bis die zur Vorrangstufe 7 gehörige Aufweckstufe 8 eine Aufweckinformation für den entsprechenden Busteilnehmer (Leuchte) in das Bussystem BUS abgegeben hat. Auf einfache Art und Weise ist somit ein elektrisches/elektronisches Installationsgerät geschaffen, welches selbst, nämlich ohne die Hilfe eines Zentralgerätes, in zeitlich engem Zusammenhang eine Aufweckinformation und eine Wirkinformation in das Bussystem abgibt. Vorteilhafterweise wird ein Aufwecksignal - wie bereits beschrieben - lediglich dann erzeugt, wenn sich das, die Wirkinformation sendende elektrische/elektronische Installationsgerät vorher im energiesparenden Betriebszustand bzw. Sleep-Modus befand. Vorteilhafterweise können zum Beispiel durch entsprechende Gestaltung der Aufweckinformation (Wecktelegramm) nur die Teilnehmer des Bussystems BUS aus dem energiesparenden Betriebszustand herausgeholt werden, für die die Wirkinformation des aussendenden elektrischen/elektronischen Installationsgerätes bestimmt ist. Somit ist eine erhöhte Einsparung von Energie auf einfache Art und Weise möglich.

### Bezugszeichenliste:

- 1: Leiterplatte
- 2: erste Schnittstelle
- 3: zweite Schnittstelle
- 4: Transceiver
- 5: Aufweckerkennungseinrichtung
- 6: Referenztelegrammspeicher
- 7: Vorrangstufe
- 8: Aufweckstufe
- 9: Stecker
- 10: Adressspeicher

- A: Anwendungsmodul
- B: Busmodul
- BUS: Bussystem
- L: Logikeinheit
- M: Mikrocontroller

## Patentansprüche

1. Elektrisches/elektronisches Installationsgerät für die Gebäudesystemtechnik, vorgesehen zum Betrieb als Teilnehmer in einem Bussystem (BUS), welches über eine erste Schnittstelle (2) mit zumindest einem weiteren Teilnehmer des Bussystems (BUS) Informationen austauscht und welches ein, mit einem Mikrocontroller (M) versehenes Anwendungsmodul (A) und ein mit einer Logikeinheit (L) versehenes Busmodul (B) aufweist, wobei das Anwendungsmodul (A) in einen energiesparenden Betriebszustand versetzt und durch den Zugang bestimmter Informationen wieder aus dem energiesparenden Betriebszustand in den normalen Betriebszustand zurückgeführt werden kann, wobei das Anwendungsmodul (A) zumindest eine Vorrangstufe (7) aufweist, die das Aussenden einer durch eine Anforderung hervorgerufene Wirkinformation so lange zurückstellt, bis durch eine, der Vorrangstufe (7) zugehörige Aufweckstufe (8) eine Aufweckinformation für zumindest einen weiteren Teilnehmer in das Bussystem (BUS) abgegeben wurde, **dadurch gekennzeichnet, dass** das Busmodul (B) eine Leiterplatte (1) aufweist, welche mit einer ersten Schnittstelle (2) für die Ankopplung an das Bussystem (BUS) eines Gebäudes versehen ist und dass auf der Leiterplatte (1) ein mit einer Empfangsstufe, einer Sendestufe und einer Energieversorgungseinheit versehener, zu einer Logikeinheit (L) gehöriger, Transceiver (4) angeordnet ist und dass dem Transceiver (4) der Logikeinheit (L) eine Aufweckerkennungseinrichtung (5) für vom Bussystem (BUS) kommende Informationen (Telegramm) zugeordnet ist, und dass die Aufweckerkennungseinrichtung (5), zum Abspeichern zumindest eines kompletten Telegrammes als Referenztelegramm, einen Referenztelegrammspeicher (6) aufweist.

2. Elektrisches/elektronisches Installationsgerät nach Anspruch 1, **dadurch gekennzeichnet, dass** eine Aufteilung in ein separates Busmodul (B) und in ein separates Anwendungsmodul (A) vorgesehen ist.

3. Elektrisches/elektronisches Installationsgerät nach Anspruch 1, **dadurch gekennzeichnet, dass** das Busmodul (B) und das Anwendungsmodul (A) Bestandteil eines einzigen Kompaktgerätes sind.

4. Elektrisches/elektronisches Installationsgerät nach einem der Ansprüche 1 bis 3, **dadurch gekennzeichnet, dass** eine Installation als Unterputzgerät vorgesehen ist.

5. Elektrisches/elektronisches Installationsgerät nach einem der Ansprüche 1 bis 3, **dadurch gekennzeichnet, dass** eine Installation als Reiheneinbaugerät vorgesehen ist.

6. Elektrisches/elektronisches Installationsgerät nach einem der Ansprüche 1 bis 5, **dadurch gekennzeichnet, dass** ein Betrieb in einem, zumindest teilweise drahtgebundenen Bussystem (BUS) vorgesehen ist.

7. Elektrisches/elektronisches Installationsgerät nach einem der Ansprüche 1 bis 6, **dadurch gekennzeichnet, dass** ein Betrieb in einem, zumindest teilweise funkbasierten Bussystem (BUS) vorgesehen ist.

8. Elektrisches/elektronisches Installationsgerät nach einem der Ansprüche 1 bis 7, **dadurch gekennzeichnet, dass** zumindest eine weitere Schnittstelle für den Informationsaustausch über zumindest ein weiteres Bussystem (BUS) vorgesehen ist.

9. Elektrisches/elektronisches Installationsgerät nach einem der Ansprüche 1 bis 8, **dadurch gekennzeichnet, dass** zumindest ein Teil der Logikeinheit (L) als ASIC ausgeführt ist.

10. Elektrisches/elektronisches Installationsgerät nach einem der Ansprüche 1 bis 9, **dadurch gekennzeichnet, dass** die Logikeinheit (L) einen Adressspeicher (10) aufweist.

11. Elektrisches/elektronisches Installationsgerät nach einem der Ansprüche 1 bis 10, **dadurch gekennzeichnet, dass** zumindest ein Bussystem (BUS) als KNX-Bussystem ausgeführt ist.

## Claims

1. Electrical/electronic installation device for building system engineering, provided for the purpose of operating as a user in a bus system (BUS), which exchanges information with at least one other user of the bus system (BUS) via a first interface (2), and which has an application module (A) provided with a microcontroller (M) and a bus module (B) provided with a logic unit (L), whereby the application module (A) is capable of being put into an energy-saving operating mode and being restored from the energy-saving mode to the normal operating mode again by inputting certain information, whereby the application module (A) has at least one priority level (7) which puts off the sending of effective information generated by a request until wake-up information for at least one other user has been emitted to the bus system (BUS) by a wake-up level (8) associated with the priority level (7), **characterised in that** the bus module (B) has a printed circuit board (1) which is provided with a first interface (2) for coupling to the bus system (BUS) of a building and that a transceiver (4) belonging to a logic unit (L) is located on the printed circuit board (1) and is provided with a receiver level, a transmission level and an energy supply unit and that a wake-up recognition facility (5) for information (telegrams) coming from the bus system (BUS) is allocated to the transceiver (4) of the logic unit (L), and that the wake-up recognition facility (5) has a reference telegram memory (6) for the purpose of storing at least one complete telegram as a reference telegram.

2. Electrical/electronic installation device according to Claim 1, **characterised in that** a division is provided into a separate bus module (B) and into a separate application module (A).

3. Electrical/electronic installation device according to Claim 1, **characterised in that** the bus module (B) and the application module (A) are a component of a single compact device.

4. Electrical/electronic installation device according to any of Claims 1 to 3, **characterised in that** installation is intended as a flush-mounted device.

5. Electrical/electronic installation device according to any of Claims 1 to 3, **characterised in that** installation is intended as a top hat rail-mounted device.

6. Electrical/electronic installation device according to any of Claims 1 to 5, **characterised in that** operation is intended in a bus system (BUS) that is at least partially wired.

7. Electrical/electronic installation device according to any of Claims 1 to 6, **characterised in that** operation is intended in a bus system (BUS) that is at least partially wireless-based.

8. Electrical/electronic installation device according to any of Claims 1 to 7, **characterised in that** at least one further interface for the exchange of information is provided by way of at least one further bus system (BUS).

9. Electrical/electronic installation device according to any of Claims 1 to 8, **characterised in that** at least one part of the logic unit (L) is executed as an ASIC.

10. Electrical/electronic installation device according to any of Claims 1 to 9, **characterised in that** the logic unit (L) has an address memory (10).

11. Electrical/electronic installation device according to any of Claims 1 to 10, **characterised in that** at least one bus system (BUS) is executed as a KNX bus system.

## Revendications

1. Appareil d'installation électrique/électronique pour la domotique, prévu pour le fonctionnement comme participant dans un système bus (BUS) qui échange des informations via une première interface (2) avec au moins un autre participant du système bus (BUS) et qui présente un module d'application (A) doté d'une microcontrôleur (M) et un module bus (B) doté d'une unité logique (L), le module d'application (A) pouvant être mis dans un état de fonctionnement économisant de l'énergie et, par l'accès de certaines informations, être remis de l'état de fonctionnement économisant de l'énergie dans l'état de fonctionnement normal, le module d'application (A) présentant au moins un palier prioritaire (7) qui retient l'envoi d'une information d'activité suscitée par une demande jusqu'à ce que le palier de réveil (8) affecté au palier prioritaire (7) ait donné une information de réveil pour au moins un autre participant dans le système bus (BUS), **caractérisé en ce que** le module bus (B) présente un circuit imprimé (1) qui est doté d'une première interface (2) pour le couplage au système bus (BUS) d'un bâtiment et que, sur le circuit imprimé, est installé un émetteur-récepteur (4) doté d'un palier de réception, d'un palier d'émission et d'une unité d'alimentation en énergie et affecté à une unité logique (L) et qu'un dispositif de reconnaissance de réveil (5) pour les informations (télégramme) provenant du système bus (BUS) est affecté à l'émetteur-récepteur (4) de l'unité logique (L) et que le dispositif de reconnaissance de réveil (5) présente une mémoire de télégramme de référence (6) pour sauvegarder au moins un télégramme complet comme télégramme de référence.

2. Appareil d'installation électrique/électronique selon revendication 1, **caractérisé en ce qu'**il est prévu une répartition en un module bus séparé (B) et en un module d'application séparé (A).

3. Appareil d'installation électrique/électronique selon revendication 1, **caractérisé en ce que** le module bus séparé (B) et le module d'application (A) font partie intégrante d'un seul appareil compact.

4. Appareil d'installation électrique/électronique selon l'une des revendications 1 à 3, **caractérisé en ce qu'**une installation est prévue comme un appareil encastré.

5. Appareil d'installation électrique/électronique selon l'une des revendications 1 à 3, **caractérisé en ce qu'**une installation est prévue comme un appareil monté en série.

6. Appareil d'installation électrique/électronique selon l'une des revendications 1 à 5, **caractérisé en ce qu'**un fonctionnement est prévue dans un système bus (BUS) avec connexion filaire, du moins partielle.

7. Appareil d'installation électrique/électronique selon l'une des revendications 1 à 6, **caractérisé en ce qu'**un fonctionnement est prévue dans un système bus (BUS) avec transmission radio du moins partielle.

8. Appareil d'installation électrique/électronique selon l'une des revendications 1 à 7, **caractérisé en ce que** au moins une autre interface est prévue pour l'échange d'informations via au moins un autre système bus (BUS).

9. Appareil d'installation électrique/électronique selon l'une des revendications 1 à 8, **caractérisé en ce que** au moins une partie de l'unité logique (L) est exécutée comme ASIC.

10. Appareil d'installation électrique/électronique selon l'une des revendications 1 à 9, **caractérisé en ce que** l'unité logique (L) présente une mémoire d'adresses (10).

11. Appareil d'installation électrique/électronique selon l'une des revendications 1 à 10, **caractérisé en ce qu'**au moins un système bus (BUS) est exécuté comme système bus KNX.
